# EUROPÄISCHE PATENTANMELDUNG

(11) **EP 4 253 650 A2**
(43) Veröffentlichungstag der Anmeldung: **04.10.2023**
(21) Anmeldenummer: 23187788.7
(22) Anmeldetag: 23.09.2020
(51) Int. Cl.: D21F 3/10

(54) **DICHTLEISTE UND DICHTEINRICHTUNG**

(30) Priorität: 16.10.2019 DE 102019127850
(62) Teilanmeldung aus: 20780149.9
(71) Anmelder: Voith Patent GmbH, 89522 Heidenheim (DE)
(72) Erfinder: ERKELENZ, Marc, 89231 Neu-Ulm (DE)
(74) Vertreter: Voith Patent GmbH - Patentabteilung

(57) **Zusammenfassung**

Dichtleiste sowie Dichteinrichtung zur Abdichtung einer Unterdruckzone einer Saugwalze für eine Maschine zur Herstellung oder Verarbeitung einer Faserstoffbahn, insbesondere einer Papier-, Karton- oder Tissuemaschine, mit einer Oberseite, welche die Dichtfläche der Dichtleiste bildet, wobei die Dichtleiste eine Sensoreinheit umfasst, welche einen ersten T-Sensor mit einem ersten Abstand zur Dichtfläche und einen zweiten T-Sensor mit einem zweiten Abstand zur Dichtfläche aufweist, und wobei der erste Abstand geringer ist, als der zweite Abstand, wobei die Dichtleiste ein Basismaterial umfasst sowie ein Schutzmaterial das unterschiedlich zum Basismaterial ist und dass die Sensoreinheit in das Schutzmaterial eingebettet, insbesondere eingegossen ist.

## Beschreibung

Die Erfindung betrifft eine Dichtleiste für eine Dichteinrichtung zur Abdichtung einer Unterdruckzone einer Saugwalze für eine Maschine zur Herstellung oder Verarbeitung einer Faserstoffbahn gemäß dem Oberbegriff des Anspruchs 1 sowie die entsprechende Dichteinrichtung.

In Maschinen zur Herstellung von Papier oder Karton kommt eine Vielzahl von besaugten Walzen zum Einsatz. Bei diesen Saugwalzen muss üblicherweise eine oder mehrere Saugzonen gegen die Innenwand des Walzenmantels abgedichtet werden, um einen zu starken Abfall des Unterdrucks zu verhindern und damit die Saugwirkung zu reduzieren. In der Praxis geschieht dieses Abdichten meist durch sogenannte Dichtleisten, welche mit einem gewissen Druck gegen die Innenwand des Walzenmantels gedrückt werden. Diese Dichtleisten stehen in einem Reibkontakt mit dem Walzenmantel, und sind dadurch einem vergleichsweise hohen Verschleiß durch Abrasion ausgesetzt.

Zur Verminderung des Verschleißes ist beispielsweise aus der DE 10 2012 207 692 bekannt, ein Schmiermittel zwischen Walzenmantel und Dichtleiste einzubringen. Da der Verschleiß jedoch nicht vollkommen beseitig werden kann, müssen die Dichtleisten nach einer gewissen Zeit ausgetauscht werden. Aufgrund der Einbausituation der Dichtleisten in der Saugwalze, kann der aktuelle Verschleißzustand der Dichtleiste im Allgemeinen aber nicht oder nur sehr grob bestimmt werden, ohne die Saugwalze zu öffnen, und damit den Produktionsprozess zu unterbrechen. Da es bei einem zu späten Austausch der Dichtleisten zu Schäden an der Saugwalze kommen kann, werden die Dichtleisten häufig schon deutlich vor Ende ihrer Betriebszeit ausgetauscht, was jedoch mit erhöhten Kosten verbunden ist. Daher ist es aus ökonomischer Sicht wünschenswert, eine genauere Information über den Verschleißzustand der Dichtleiste während des laufenden Betriebs zu erhalten. Aus dem Stand der Technik ist bekannt, Sensoren in die Dichtleiste zu integrieren, die während des Betriebs der Saugwalze Informationen über den Grad des Verschleißes liefern.

In der Schrift DE 10 2012 208 811 wird hierzu ein Sensorsystem auf Basis von Fluidgefüllten Schläuchen vorgeschlagen. Dieses System funktioniert sehr zuverlässig, jedoch benötigt es eine recht anspruchsvolle Ventiltechnik, um den Druck in Schläuchen konstant zu halten. Dies wird von einigen Anwendern als nachteilig angesehen.

Eine alternative Lösung wird in der WO 2016/040974 vorgeschlagen. Hier werden Temperatursensoren auf verschiedenen Höhen der Dichtleiste installiert. Wird durch Abrasion die Dichtleiste bis zur Einbautiefe eines Temperatursensors verschlissen, so wird dadurch der Sensor zerstört, und das Temperatursignal bleibt aus. Somit kann aus dem Ausbleiben des Temperatursignals indirekt auf den Verschleißzustand der Dichtleiste geschlossen werden. Dieses System hat prinzipiell die Vorteile, dass es mit vergleichsweise günstigen Standardbauteilen auskommt. Zudem liefert es mit einer Sensoreinheit sowohl Informationen über den Verschleißzustand, als auch über die Temperatur der Dichtleiste. Erste Tests haben jedoch ergeben, dass derartige Systeme in den harschen Bedingungen, die im inneren einer Saugwalze herrschen, sehr fehleranfällig sind und üblicherweise nach kurzer Zeit ausfallen.

Es ist daher Aufgabe der Erfindung, den Stand der Technik derart weiter zu entwickeln, dass eine zuverlässige, dauerhafte Messung möglich ist.

Es ist eine weitere Aufgabe der Erfindung, eine Dichtleiste vorzuschlagen, welche einfach, kostengünstig und zuverlässig mit einem Messsystem ausgestattet werden kann.

Diese Aufgabe wird vollständig gelöst durch eine Dichtleiste gemäß Anspruch 1, sowie eine Dichteinrichtung gemäß Anspruch 13. Weitere vorteilhafte Merkmale der erfindungsgemäßen Ausführung finden sich in den Unteransprüchen.

Hinsichtlich der Dichtleiste wird die Aufgabe gelöst durch eine Dichtleiste für eine Dichteinrichtung zur Abdichtung einer Unterdruckzone einer Saugwalze für eine Maschine zur Herstellung oder Verarbeitung einer Faserstoffbahn, insbesondere einer Papier-, Karton- oder Tissuemaschine, mit einer Oberseite, welche die Dichtfläche der Dichtleiste bildet, wobei die Dichtleiste eine Sensoreinheit umfasst, welche einen ersten T-Sensor mit einem ersten Abstand zur Dichtfläche und einen zweiten T-Sensor mit einem zweiten Abstand zur Dichtfläche aufweist, und wobei der erste Abstand geringer ist, als der zweite Abstand. Erfindungsgemäß ist vorgesehen, dass die Dichtleiste ein Basismaterial umfasst sowie ein Schutzmaterial das unterschiedlich zum Basismaterial ist und dass die Sensoreinheit in das Schutzmaterial eingebettet, insbesondere eingegossen ist.

Bei T-Sensoren handelt es sich dabei um Sensoren, die zur Messung mit einer elektrischen Spannungsquelle in Verbindung stehen.

Bei den T-Sensoren kann es sich insbesondere um Temperatursensoren handeln. Da es sich dabei um die bevorzugte Ausführung handelt, wird im weiteren Verlauf der Anmeldung die Erfindung am Beispiel dieser Temperartursensoren erläutert. Alternativ können die T-Sensoren aber beispielsweise als Kontaktsensoren ausgeführt sein, welche bei elektrisches Signal erzeugen, wenn sie in Kontakt mit dem metallischen Walzenmantel kommen.

In einer anderen Ausführung kann ein T-Sensor aber auch schlicht als Leiterschlaufe ausgeführt sein. Die Messwirkung eines solchen Sensors besteht dann darin, dass die elektrische Leitung unterbrochen wird, sobald ein Teil der Leiterschlaufe durch Verschleiß zerstört wird.

Hier ist eine Vielzahl einfacher und kostengünstiger Ausführungen der T-Sensoren vortstellbar.

Die Standzeiten von Dichtleisten sind Saugwalzen sind vergleichsweise lang und betragen üblicherweise ein Jahr oder mehr. Dies bedeutet, dass auch die in den Leisten verbaute Sensorik diese Standzeiten aufweisen muss. Bei den aus dem Stand der Technik bekannten Lösungen wurde jedoch beobachtet, dass die Temperatursensorik bereits deutlich früher, teilweise schon nach wenigen Wochen, gar nicht oder nicht mehr zuverlässig funktionierte.

Der Erfinder hat erkannt, dass die Ursache hierfür im Eindringen von Feuchtigkeit liegt, welche die Elektronik beschädigt. Beim Erreichen des ersten Verschleißpunktes wird ein erster Temperatursensor durch die Walze zerstört, wodurch ja das erste Verschleißsignal ermittelt wird. Jedoch entsteht spätestens jetzt an der Stelle des zerstörten Sensors eine Schwachstelle, über die Feuchtigkeit an die Platine, auf die der Sensor montiert war, gelangen kann. Diese Feuchtigkeit wird mit der Zeit durch Diffusion, Kapillarkräfte oder ähnliches langsam aber kontinuierlich weiter entlang der Platine vordringen und die dort angebrachte Elektronik zerstören. Eine zuverlässige, dauerhafte Messung über die oben erwähnen lange Standzeiten der Leiste hinweg ist damit nicht möglich.

Zur Lösung dieses Problems schlägt der Erfinder nun vor, die T-Sensoren - insbesondere in Form von Temperatursensoren- möglichst gut voneinander -sowie vorteilhafterweise auch von eventuell weiteren verbauten elektrischen Bauteilen - zu separieren.

Dabei ist vorgesehen, dass die Sensoreinheit in ein Schutzmaterial eingebettet ist. Vorteilhafterweise sind die Sensoren - gegebenenfalls zusammen mit der Platine oder einem anderen Träger, auf dem sie befestigt sind- in ein Schutzmaterial eingegossen.

Das Schutzmaterial ist dabei ein anderes Material, als das Basismaterial der Dichtleiste. Während das Basismaterial auf die Funktion hin optimiert werden kann, die Dichtfläche der Dichtleiste im Wesentlichen zur Verfügung zu stellen, kann das Schutzmaterial daraufhin optimiert werden, ein Eindringen von Feuchtigkeit in die Elektrik bzw. Elektronik der Sensorik zu verhindern oder zumindest stark zu behindern.

Vorteilhafte Basismaterialien können aus einem Graphit bestehen, oder dieses umfassen. Insbesondere Mischungen von Graphit mit einem Elastomer können sehr vorteilhaft sein.

Als Schutzmaterial können bevorzugt Polymermaterialien eingesetzt werden.

Vorteilhafterweise kann das Schutzmaterial so gewählt sein, dass es an T-Sensoren oder der Platine haftet, um das Eindringen von Feuchtigkeit weiter zu erschweren. Ein weiteres Auswahlkriterium für ein geeignetes Schutzmaterial ist die Funktion der Wasserabweisung, Hydrophobie und/oder eine minimale Wasseraufnahme bzw.

Quellung des Materials. Insbesondere ist es vorteilhaft, wenn das Schutzmaterial hydrophober ist, als das Basismaterial.

In bevorzugten Ausführungen kann die Dichtleiste weiterhin eine Steuereinheit -z.B. in Form eines Mikrochips-umfassen, die mit dem ersten T-Sensor und/oder dem zweiten T-Sensor verbunden bzw. verbindbar sind.

Diese Steuereinheit kann bei der Verwendung von Temperatursensoren beispielsweise dazu eingerichtet sein, aus den von den Temperatursensoren übermittelten Rohdaten die gemessene Temperatur zu ermitteln.

Weiterhin kann die Steuereinheit dazu eingerichtet sein, aus den von den T-Sensoren übermittelten Rohdaten die Zerstörung des Sensors durch Verschleiß zu ermitteln. Besonders vorteilhaft ist es, wenn sowohl die Temperatur als auch der Verschleißzustand des Sensors, und damit auch der Verschleißzustand der Leiste ermittelt und insbesondere auch übertragen wird.

Vorteilhafterweise ist die Steuereinheit als Teil der Sensoreinheit ausgeführt, und dadurch mit in das Schutzmaterial eingebettet.

Die Verbindung zwischen T-Sensoren und Steuereinheit kann beispielsweise über Kabel erfolgen.

Falls die Sensoren und die Steuereinheit auf derselben Platine montiert sind, kann die Verbindung auch über Leiterbahnen erfolgen. Generell ist es vorteilhaft, wenn die Verbindung zwischen T-Sensoren und Steuereinheit im unteren Teil, speziell im unteren Drittel der Dichtleiste vorgesehen ist, also in dem Teil, der von der Dichtfläche möglichst weit entfernt ist. So kann weitgehend vermieden werden, dass Feuchtigkeit, die über einen bereits zerstörten T-Sensor entlang der zugehörigen Platine vordringt, während der Betriebszeit der Leiste bis zur Steuereinheit vordringt und diese beschädigt.

Neben dem ersten T-Sensor und/oder dem zweiten T-Sensor sowie der Steuereinheit kann die Sensoreinheit auch noch weitere Sensoren, insbesondere noch einen dritten T-Sensor und einen vierten T-Sensor umfassen, welche ebenfalls mit der Steuereinheit verbunden oder verbindbar sind.

An dieser Stelle sei darauf hingewiesen, dass bei einer Sensoreinheit mit mehr als zwei T-Sensoren der dritte (vierte, fünfte etc.) T-Sensor einen dritte Abstand zur Oberfläche haben kann, der sich vom ersten und zweiten Abstand unterscheidet (Dadurch kann dann ein drittes Verschleißniveau ermittelt werden) Es ist aber auch möglich, dass der dritte T-Sensor wieder den ersten oder zweiten Abstand zur Dichtfläche aufweist. In diesem Fall kann überprüft werden, ob das zugehörige Verschleißniveau an verschiedenen Stellen über die Breite zur gleichen Zeit erreicht wird.

Weiterhin kann vorteilhafterweise vorgesehen sein, dass die Sensoreinheit zudem eine Energieversorgung zur Versorgung der T-Sensoren und/oder der Steuereinheit umfasst. Hierbei kann es sich beispielsweise um eine Batterie handeln.

In vorteilhaften Ausführungen kann die Sensoreinheit auch eine Übertragungsvorrichtung umfassen, die dazu eingerichtet ist, eine Datenverbindung, insbesondere eine drahtlose Datenverbindung zu einer Auswerteeinheit außerhalb der Dichtleiste aufzubauen. Die Steuereinheit kann in bevorzugten Ausführungen dazu eingerichtet sein, auch die Übertragungsvorrichtung zu steuern.

Die Übertragung der Daten mittels der Datenverbindung kann dabei kontinuierlich erfolgen, oder in vordefinierten bzw. vordefinierbaren Zeitabständen.

In besonders bevorzugten Ausführungen kann vorgesehen sein, dass der erste T-Sensor und der zweite T-Sensor in Breitenrichtung der Dichtleiste betrachtet durch Schutzmaterial voneinander getrennt sind. Als Breitenrichtung der Dichtleiste wird dabei die Richtung ihrer längsten Erstreckung bezeichnet, da diese sich, bei ihrer vorgesehenen Verwendung in einer Maschine zur Herstellung oder Behandlung einer Faserstoffbahn über die Maschinenbreite erstreckt.

Die Trennung der T-Sensoren kann beispielsweise dadurch realisiert sein, dass der erste T-Sensor auf einer ersten Platine und der zweite T-Sensor auf einer zweiten Platine angebracht sind. Beide Platinen sind dabei als Teil der Sensoreinheit in das Schutzmaterial eingebettet, insbesondere eingegossen. Durch einen solchen modularen Aufbau müssen die einzelnen T-Sensoren nicht unmittelbar nebeneinander gesetzt werden. Der (Breiten-) Abstand der Sensoren zueinander - und gegebenenfalls auch zu der Steuereinheit- kann variabel gestaltet werden. Dabei können die Sensoren einen Abstand aufweisen, der bis zu 200mm, aber auch bis zu 500mm oder mehr betragen kann. Je größer diese Abstände sind, desto unwahrscheinlicher wird es, dass Feuchtigkeit über einen zerstörten Sensor bis zu einem noch aktiven Sensor oder zur Steuereinheit vordringt und diese zerstört.

Alternativ können die beiden T-Sensoren aber auch auf derselben Platine montiert sein. Durch ein eine geeignete Formgebung der Platine kann auch hier eine gute Separation der Sensoren erzielt werden.

Bevorzugt kann vorgesehen sein, dass die Dichtleiste zwei oder mehr Sensoreinheiten umfasst. Diese Sensoreinheiten können über die Breitenrichtung der Dichtleiste verteilt angeordnet sein. Dadurch kann unter anderem ermittelt werden, ob die Temperatur und der Verschleiß der Leiste über die Breite gleichmäßig ist, oder ob einige Stellen schneller verschleißen bzw. sich mehr aufheizen, als andere. Vorteilhaft ist es, Sensoreinheiten im Bereich der Mitte, sowie der beiden Ränder anzuordnen. Hierzu sind mindestens drei Sensoreinheiten notwendig.

Weiterhin wird eine Dichteinrichtung zur Abdichtung einer Unterdruckzone einer Saugwalze für eine Maschine zur Herstellung oder Verarbeitung einer Faserstoffbahn, insbesondere einer Papier-, Karton- oder Tissuebahn, vorgeschlagen, wobei die Dichteinrichtung zumindest eine Dichtleiste nach einem Aspekt der Erfindung umfasst.

Vorteilhafterweise kann die Dichteinrichtung zwei oder mehr Dichtleisten gemäß einem Aspekt der Erfindung umfassen. Besonders bevorzugt können alle Dichtleisten gemäß einem Aspekt der Erfindung ausgeführt sein.

In einer bevorzugten Ausführung kann vorgesehen sein, dass die Dichteinrichtung eine Auswerteinheit umfasst, die mit zumindest einer Steuereinheit - bevorzugt allen Steuereinheiten - über eine Datenverbindung, insbesondere eine drahtlose Datenverbindung gekoppelt oder koppelbar ist.

Eine solche Auswerteeinheit kann dazu eingerichtet sein, die Temperatur und Verschleißdaten einer Dichtleiste zu visualisieren.

Alternativ oder zusätzlich kann die Auswerteeinheit dazu eingerichtet sein, aus den ermittelten Verschleißdaten - gegebenenfalls unter Verwendung anderer Daten der Maschine - eine Restlebensdauer der Dichtleiste zu ermitteln.

Die Auswerteeinheit kann dabei auch in Form eines mobilen Geräts, wie beispielsweise eines Smartphones oder Tablet-Computers realisiert sein. Dies hat den Vorteil, dass das Betreiberpersonal z.B. bei einem Wartungsrundgang durch die Anlage direkt den Verschleißzustand der Leisten erkennen kann.

Es ist dabei dann insbesondere Vorteilhaft, wenn die Dichteinrichtung mehrere derartige Auswerteeinheiten umfasst. Dann kann jeder Mitarbeiter, oder jede Mitarbeiterin unabhängig mit ihrem mitgeführten mobilen Gerät auf diese Daten zugreifen und gegebenenfalls Maßnahmen daraus ableiten.

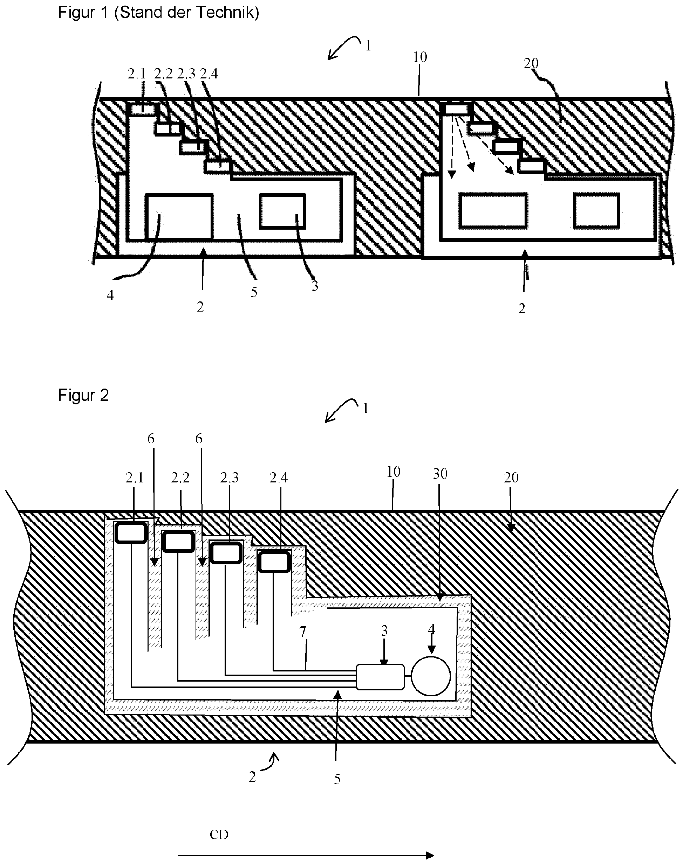

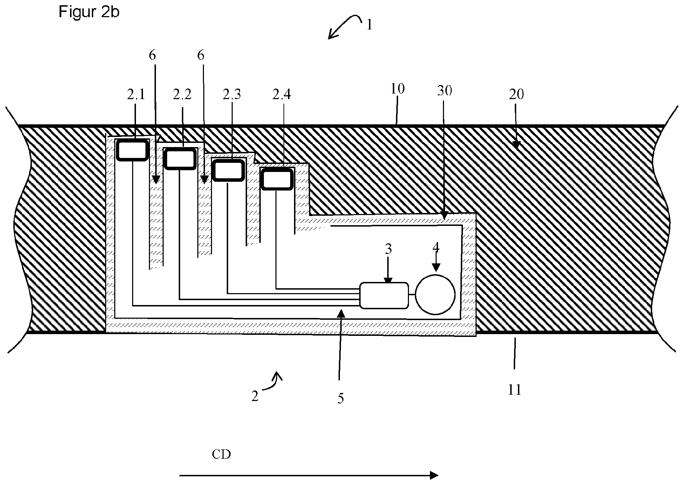

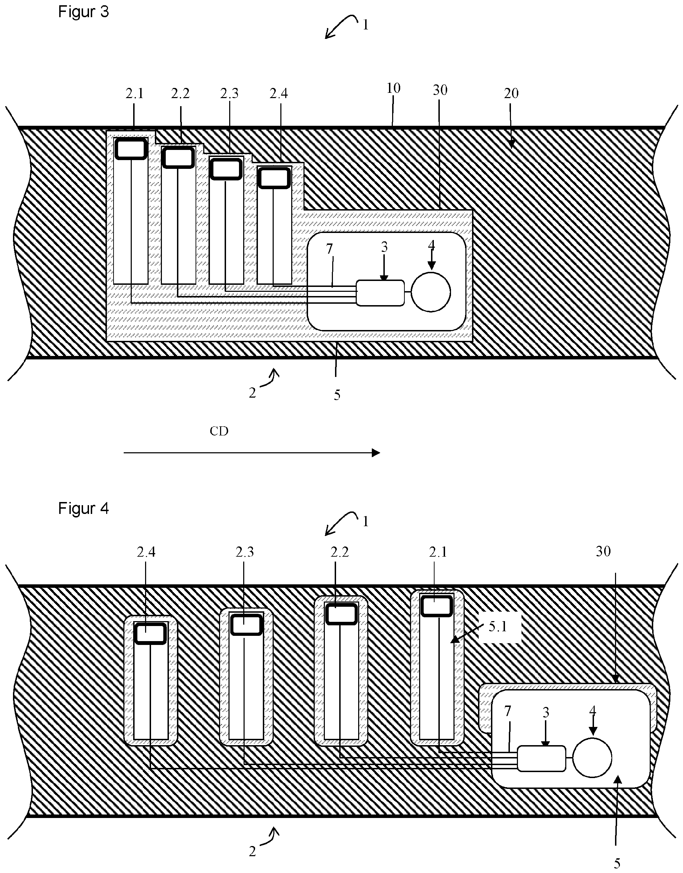

Wie bereits eingangs erwähnt schlägt der Erfinder zur Lösung der Aufgabe vor, die T-Sensoren -insbesondere in Form von Temperatursensoren- möglichst gut voneinander -sowie vorteilhafterweise auch von eventuell weiteren verbauten elektrischen Bauteilen - zu separieren. Eine alternative Lösung dieser Separation - welche eine zweite erfinderische Idee darstellt- kann dadurch realisiert sein, dass die T-Sensoren jeweils auf separaten Platinen angeracht sind, welche voneinander beabstandet in separaten Aussparungen des Basismaterials der Dichtleiste angebracht sind. Eine Ausführungsform dieser Idee ist in Figur 4 dargestellt, wobei auf das Schutzmaterial verzichtet werden kann. Durch das zwischen den Sensoren angeordnete Basismaterial ist ein direktes Vordringen von Feuchtigkeit von einem verschlissenen Sensor zum nächsten nicht möglich. Eine weitere Ausführungsform der zweiten erfinderischen Idee ist es, statt der separaten Platinen eine gemeinsame Platine zu verwenden, welche jedoch zwischen den einzelnen T-Sensoren Einschnitte aufweist, wie sie in den Figuren 2, 2b und 3 gezeigt sind. Im Gegensatz zu den dort gezeigten Sensoreinheiten sind dann jedoch die Einschnitte nicht mit einem Schutzmaterial gefüllt, sondern mit dem Basismaterial der Dichtleiste. Die Breite der Einschnitte sollte hier bevorzugt mindestens 5mm oder 10mm betragen. Technologisch sind auch deutlich größere Abstände von 200mm, 500mm oder mehr wünschenswert. Bei der Tiefe eines Einschnitts ist es vorteilhaft, wenn dieser zumindest 2mm, bevorzugt 5mm, besonders bevorzugt 10mm oder mehr unterhalb der Position des tieferen der beiden Sensoren reicht.

Die folgenden Sätze, die keine Patentansprüche darstellen, beschreiben diese zweite erfinderische Idee noch näher. Dabei sind Begriffe, Materialien ebenso wie Größen und Abstände etc., wenn nicht explizit anders beschrieben, identisch mit denen der ersten erfinderischen Idee.

Satz 1. Dichtleiste für eine Dichteinrichtung zur Abdichtung einer Unterdruckzone einer Saugwalze für eine Maschine zur Herstellung oder Verarbeitung einer Faserstoffbahn, insbesondere einer Papier-, Karton- oder Tissuemaschine, mit einer Oberseite, welche die Dichtfläche der Dichtleiste bildet, wobei die Dichtleiste eine Sensoreinheit umfasst, welche einen ersten T-Sensor mit einem ersten Abstand zur Dichtfläche und einen zweiten T-Sensor mit einem zweiten Abstand zur Dichtfläche aufweist, und wobei der erste Abstand geringer ist, als der zweite Abstand, und wobei die Dichtleiste ein Basismaterial umfasst dadurch gekennzeichnet, dass erste T-Sensor auf einer ersten Platine und der zweite T-Sensor auf einer zweiten Platine angebracht ist, welche voneinander beabstandet in separaten Aussparungen des Basismaterials der Dichtleiste angebracht sind.

Satz 1b. Dichtleiste für eine Dichteinrichtung zur Abdichtung einer Unterdruckzone einer Saugwalze für eine Maschine zur Herstellung oder Verarbeitung einer Faserstoffbahn, insbesondere einer Papier-, Karton- oder Tissuemaschine, mit einer Oberseite, welche die Dichtfläche der Dichtleiste bildet, wobei die Dichtleiste eine Sensoreinheit umfasst, welche einen ersten T-Sensor mit einem ersten Abstand zur Dichtfläche und einen zweiten T-Sensor mit einem zweiten Abstand zur Dichtfläche aufweist, und wobei der erste Abstand geringer ist, als der zweite Abstand, und wobei die Dichtleiste ein Basismaterial umfasst dadurch gekennzeichnet, dass erste T-Sensor und der zweite T-Sensor auf einer gemeinsamen Platine angebracht sind, wobei die gemeinsame Platine zwischen den Sensoren einen Einschnitt aufweist und die Sensoreinheit so in der Dichtleiste befestigt ist, dass die T-Sensoren voneinander beabstandet in separaten Aussparungen des Basismaterials der Dichtleiste angebracht sind.

Satz 2. Dichtleiste gemäß Satz 1 oder Satz 1b , dadurch gekennzeichnet, dass es sich bei dem ersten und/oder dem zweiten T-Sensor um einen Temperatursensor handelt.

Satz 3. Dichtleiste nach einem der vorherigen Sätze, dadurch gekennzeichnet, dass der erste T-Sensor und der zweite T-Sensor in Breitenrichtung der Dichtleiste betrachtet durch Basismaterial voneinander getrennt sind.

Satz 4. Dichtleiste nach einem der vorherigen Sätze, dadurch gekennzeichnet, dass das Basismaterial ein Graphit umfasst oder daraus besteht.

Satz 5. Dichtleiste nach einem der vorherigen Sätze, dadurch gekennzeichnet, dass die Dichtleiste weiterhin ein Schutzmaterial umfasst, das unterschiedlich zum Basismaterial ist und die Sensoreinheit ganz oder teilweise in das Schutzmaterial eingebettet, insbesondere eingegossen ist

Satz 5a. Dichtleiste nach Satz 5, dadurch gekennzeichnet, dass das Schutzmaterial ein Polymermaterial umfasst oder daraus besteht.

Satz 6. Dichtleiste nach einem der vorherigen Sätze, dadurch gekennzeichnet, dass die Sensoreinheit eine Steuereinheit aufweist, die mit dem ersten T-Sensor und/oder dem zweiten T-Sensor verbunden bzw. verbindbar ist.

Satz 7. Dichtleiste nach einem der vorherigen Sätze, dadurch gekennzeichnet, dass die Sensoreinheit weitere T-Sensoren, insbesondere noch einen dritten T-Sensor und einen vierten T-Sensor umfasst, welche insbesondere mit einer Steuereinheit verbunden oder verbindbar sind.

Satz 8. Dichtleiste nach einem der vorherigen Sätze, dadurch gekennzeichnet, dass die Sensoreinheit eine Energieversorgung zur Versorgung der T-Sensoren und/oder der Steuereinheit umfasst.

Satz 9. Dichtleiste nach einem der vorherigen Sätze, dadurch gekennzeichnet, dass die Sensoreinheit eine Übertragungsvorrichtung umfasst, die dazu eingerichtet ist, eine Datenverbindung, insbesondere eine drahtlose Datenverbindung zu einer Auswerteeinheit außerhalb der Dichtleiste aufzubauen.

Satz 10. Dichtleiste nach einem der Sätze 5 bis 9, dadurch gekennzeichnet, dass sowohl die erste Platine als auch die zweite Platine in das Schutzmaterial eingebettet, insbesondere eingegossen sind.

Satz 11. Dichtleiste nach einem der vorherigen Sätze, dadurch gekennzeichnet, dass die Dichtleiste zwei oder mehr Sensoreinheiten umfasst.

Satz 12. Dichteinrichtung zur Abdichtung einer Unterdruckzone einer Saugwalze für eine Maschine zur Herstellung oder Verarbeitung einer Faserstoffbahn, insbesondere einer Papier-, Karton- oder Tissuebahn, dadurch gekennzeichnet, dass die Dichteinrichtung zumindest eine Dichtleiste nach einem der vorherigen Sätze umfasst.

Satz 13. Dichteinrichtung gemäß Satz 12, dadurch gekennzeichnet, dass die Dichteinrichtung eine Auswerteinheit umfasst, die mit zumindest einer Steuereinheit über eine Datenverbindung, insbesondere eine drahtlose Datenverbindung gekoppelt oder koppelbar ist.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
Figur 1 zeigt eine Dichtleiste, wie sie aus dem Stand der Technik bekannt ist
Figur 2 zeigt eine Dichtleiste, die gemäß einem Aspekt der Erfindung ausgeführt ist.
Figur 2b zeigt eine Dichtleiste, gemäß einem weiteren Aspekt der Erfindung.
Figur 3 zeigt eine Dichtleiste, gemäß einem weiteren Aspekt der Erfindung.
Figur 4 zeigt eine Dichtleiste, gemäß einem weiteren Aspekt der Erfindung.
Figur 5 und Figur 5a zeigen einen Ausschnitt aus einer Sensoreinheit, wie sie für eine Dichtleiste gemäß Aspekte der Erfindung verwendet werden können.
Figur 6 zeigt einen Ausschnitt einer Saugwalze, die mit einer Dichteinrichtung gemäß einem Aspekt der Erfindung ausgerüstet ist

Nachfolgend werden die Figuren detaillierter beschrieben.

Figur 1 zeigt einen Ausschnitt aus einer Dichtleiste, wie sie aus dem Stand der Technik bekannt ist. Dabei sind in der Dichtleiste 1 mehrere Sensoreinheiten 2 vorgesehen. Jede der Sensoreinheiten weist vier Temperatursensoren 2.1, 2.2, 2.3, 2.4 auf, die mit unterschiedlichem Abstand zur Oberseite 10 der Dichtleiste 1 angeordnet sind. Die Temperatursensoren 2.1, 2.2, 2.3, 2.4 sind dabei auf einer gemeinsamen Platine 5 montiert, zusammen mit einer Steuereinheit 3 und einer Batterie 4 zur Energieversorgung. Die Sensoren 2.1, 2.2, 2.3, 2.4 sitzen dabei direkt im Basismaterial 20 der Dichtleiste 1. Für den unteren Teil der Platine 5 ist ein Hohlraum in der Leiste 1 vorgesehen. Wir bei dieser Ausführung einer Leiste der erste Temperatursensor 2.1 durch Verschleiß zerstört, kann an dieser Stelle Feuchtigkeit eindringen, die sich entlang der Platine 5 weitgehend ungehindert in Richtung der anderen Sensoren 2.2, 2.3, 2.4 sowie der elektrischen bzw. elektronischen Bauteile ausbreiten, und diese Bauteile zerstören kann.

Figur 2 zeigt demgegenüber eine Dichtleiste 1 mit einer Sensoreinheit 2, die gemäß einem Aspekt der Erfindung ausgeführt ist. Auch hier sind beispielhaft vier Temperatursensoren 2.1, 2.2, 2.3, 2.4 auf einer gemeinsamen Platine 5 mit einer Steuereinheit 3 und einer geeigneten Energieversorgung 4 angeordnet. Die Temperatursensoren 2.1, 2.2, 2.3, 2.4 sind über geeignete Leitungen 7 mit der Steuereinheit 3 verbunden.

Im Unterschied zu Figur 1 ist die Sensoreinheit 2 aus Figur 2 jedoch in ein Schutzmaterial 30 eingebettet, speziell eingegossen. Bei dem Schutzmaterial 30 kann es sich beispielsweise um ein Polymermaterial 30 handeln. Das Schutzmaterial 30 unterscheidet sich dabei vom Basismaterial 20 der Dichtleiste 1, das üblicherweise aus einem Graphit besteht oder diese umfasst. Das Schutzmaterial 30 umschließt dabei die Sensoreinheit 2 entweder - wie in Figur 2 gezeigt -vollständig oder in Teilen. Insbesondere die Temperatursensoren 2.1, 2.2, 2.3, 2.4 können bevorzugt von dem Schutzmaterial 30 ganz oder in großen Teilen umschlossen sein.

Diese Schutzmaterial 30, das vorteilhafterweise an den Temperatursensoren 2.1, 2.2, 2.3, 2.4 und/oder der Platine 5 haftet.

Die Steuereinheit 3 kann in allen Beispielen, auch wenn nicht explizit erwähnt, eine Übertragungsvorrichtung umfassen bzw. mit ihr verbunden sein, um eine Datenverbindung, insbesondere eine drahtlose Datenverbindung zu einer Auswerteeinheit außerhalb der Dichtleiste aufzubauen. Eine solche drahtlose Datenübertragung kann beispielsweise über Bluetooth, WLAN oder ähnliches erfolgen.

Bei der Ausführung in Figur 2 ist die Platine 5 zusätzlich noch mit Einschnitten 6 versehen. Somit entsteht ein Abstand in CD-Richtung zwischen benachbarten Temperatursensoren 2.1, 2.2, 2.3, 2.4, der mit Schutzmaterial 30 gefüllt ist. Somit wird zusätzlich das Vordringen der Feuchtigkeit von einem verschlissenen Sensor zu seinem noch intakten Nachbarsensor behindert. Die Breite der Einschnitte 6 sollte bevorzugt mindestens 1 mm, besonders bevorzugt mindestens 5mm oder 10mm betragen. Technologisch sind auch deutlich größere Abstände von 200mm, 500mm oder mehr wünschenswert. Da derartige Platinen 5 aber unhandlich werden, werden in weiteren Figuren hierfür noch alternative Bauformen beschrieben werden.

Bei der Tiefe eines Einschnitts ist es vorteilhaft, wenn dieser zumindest 2mm, bevorzugt 5mm, besonders bevorzugt 10mm oder mehr unterhalb der Position des tieferen der beiden Sensoren reicht.

Figur 2b zeigt eine Variante der Leiste 1 aus Figur 2. Die beiden Leisten 1 unterscheiden sich lediglich dadurch, dass in Figur 2 die gesamte Sensoreinheit 2 zusammen mit dem Schutzmaterial 30 im Inneren der Leiste 1 liegt, und vollständig von Basismaterial 20 umgeben ist. In Figur 2b hingegen wird ein Teil der Unterseite 11 der Leiste 1 durch Schutzmaterial 30 gebildet. Die kann fertigungstechnisch vorteilhaft sein. Die Sensoreinheit 2 kann von unten in eine passende Aussparung der im Basismaterial 20 der Leiste 1 eingesetzt, und mit dem Schutzmaterial 30 vergossen werden. Alternativ kann eine bereist in Schutzmaterial 30 eingebettete Sensoreinrichtung 2 auch einfach über die Unterseite in die Leiste eingesetzt werden.

Die Ausführung in Figur 3 zeigt eine Leiste 1 gemäß einem weiteren Aspekt der Erfindung. Dabei ist die Sensoreinheit 2 nun nicht mehr auf einer einzelnen Platine 5 angeordnet. Stattdessen ist jeder Temperatursensor 2.1, 2.2, 2.3, 2.4 auf einer separaten Platine 5.1 angebracht. Auf jeder dieser Platinen 5.1 können noch weitere Elemente angebracht sein. Insbesondere können die Steuereinheit 3 und/oder die Energieversorgung 4, die in Figur 3 auf einer eigenen, separaten Platine 5 vorgesehen sind, zusammen mit einem der Temperatursensoren auf einer gemeinsamen Platine vorgesehen sein. Dabei bietet es sich an, wenn die Steuereinheit zusammen mit demjenigen Temperatursensor 2.4 auf einer Platine angebracht ist, welcher am weitesten von der Oberseite 10 entfernt ist.

Die Leitungen 7 zum Verbinden der Sensoren 2.1, 2.2, 2.3, 2.4 mit der Steuereinheit können ganz oder teilweise als Kabelverbindung ausgeführt sein.

Die Einschnitte 6 der in Figur 2/2b gezeigten Sensoreinheit 2 werden in Figur 3 durch die Abstände der Sensoren zueinander ersetzt. Diese Abstände können analog zu den Einschnitten dimensioniert sein.

Während bei der Sensoreinheit 2 in Figur 3 schon auf eine gemeinsame Platine 5 verzichtet wird, sind bei dieser Ausführung die einzelnen Bauteile noch so in das Schutzmaterial 30 eingebettet und zusammengefügt, dass die gesamte Sensoreinheit 2 ein einzelnes Element vorliegt.

Die Ausführung in Figur 4 zeigt exemplarisch, dass auch Dichtleisten 1 gemäß einem Aspekt der Erfindung realisiert werden können, bei denen die Sensoreinheit 2 aus mehreren, separaten Teilen bestehen. Die Sensoreinheit 2 ist im Wesentlichen gleich aufgebaut, wie die Einheit in Figur 3, jedoch sind nur die Temperatursensoren mit ihren Platinen nun einzeln in Schutzmaterial 30 eingebettet. Die Sensorpakete aus Temperatursensor 2.1, zugehöriger Platine 5.1 sowie dem einbettenden Schutzmaterial 30 sind prinzipiell frei beweglich, und lediglich über Leitungen 7 mit der Steuereinheit 3 verbunden. Auf diese Weise können die Temperatursensoren 2.1, 2.2, 2.3, 2.4 vergleichsweise einfach auch mit großen Abständen von 200mm, 500mm oder mehr zueinander und zu der Steuereinheit 3 positioniert werden. Das erhöht nicht nur die Ausfallsicherheit bei Eindringen von Feuchtigkeit. Es ermöglicht auch eine einfache Überwachung der Leiste 1 über ihre gesamte Breite.

Wenn der dritte Temperatursensor 2.3 und der vierte Temperatursensor 2.4 beispielsweise wieder den ersten Abstand zur Oberfläche 10 aufweisen, lässt sich so die Gleichmäßigkeit des Leistenverschleißes überprüfen.

Weiterhin zeigt die Sensoreinheit 3 in Figur 4, dass nicht die gesamte Sensoreinheit 2 von Schutzmaterial 30 umschlossen zu sein braucht. Exemplarisch ist hier die Platine 5 der Steuereinheit 3 nur teilweise von Schutzmaterial 30 umschlossen. Es ist im Rahmen der Erfindung auch eine Ausführung denkbar, bei der die Platine mit der Steuerungseinheit 3 überhaupt nicht von Schutzmaterial 30 umschlossen ist. Auf diese beiden Weisen kann beispielsweise verhindert werden, dass eine empfindliche Elektronik durch das Einbetten in Schutzmaterial 30 - z.B. durch die Temperatur des geschmolzenen Schutzmaterials 30 beim Eingießen- beschädigt wird.

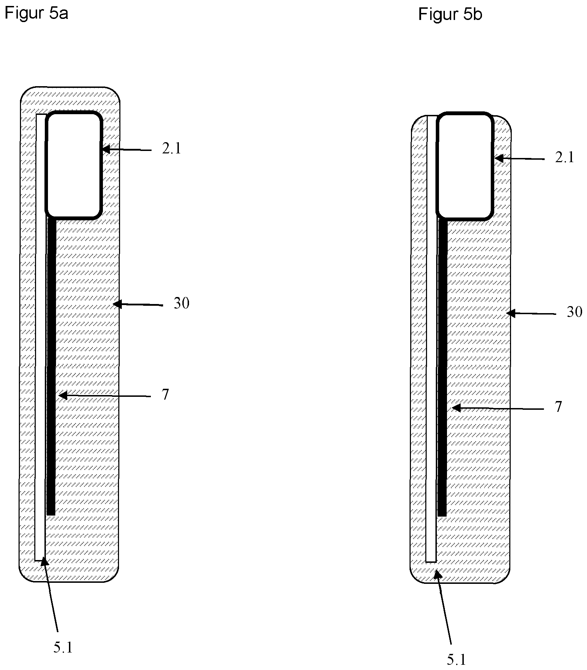

Die Figuren 5a und 5b zeigen jeweils einen seitlichen Schnitt eines Temperatursensors 2.1 auf einer Platine 5.1, der jeweils als Temperatursensor 2.1 für eine Sensoreinheit 2 in einer Leiste 1 gemäß verschiedenen Aspekten der Erfindung eingesetzt werden kann. Während Schutzmaterial 30 seitlich, vorne, hinten und unterhalb des Temperatursensors 2.1 ein weiteres Vordringen von Feuchtigkeit nach dem Verschleiß des Sensors 2.1 verhindern kann, kann Schutzmaterial 30 oberhalb des Temperatursensors 2.1, also in Richtung zur Oberseite 10 der Leiste hierzu keinen Beitrag leisten. Dort vorgesehenes Schutzmaterial 10 wird durch den bewegten Walzenmantel nämlich bereits abgetragen, bevor der eigentliche Sensor zerstört wird. Insofern kann es sehr vorteilhaft sein, wenn oberhalb des eigentlichen Temperatursensors 2.1, 2.2, 2.3, 2.4 wie in Figur 5b gezeigt kein Schutzmaterial 30 vorgesehen wird, bzw. wenn dieses Schutzmaterial 30 vor dem Einbau der Sensoreinrichtung 2 in den Leistenkörper entfernt wird.

Dies ist unter anderem auch deshalb vorteilhaft, weil sich dann die Sensorposition in Dickenrichtung, also der Abstand des Temperatursensors 2.1, 2.2, 2.3, 2.4 zur Oberseite 10 sehr einfach und genau bestimmen lässt, was bei einer Überdeckung mit Schutzmaterial 30 nur mit großem Aufwandmöglich ist, da dazu die genau Dicke der Überdeckung mit Schutzmaterial 30 bekannt sein muss. Wenn man bedenkt, dass der Verschleiß einer Dichtleiste 1 vergleichsweise langsam von statten geht und bereits Ungenauigkeiten von Zehntelmillimetern bei der Bestimmung des ersten Abstands oder des zweiten Abstands zu signifikanten Fehlern bei der Ermittlung der Restlaufzeit der Dichtleiste 1 führen können, ist die einfache Möglichkeit der genauen Positionierung der Sensoren ein durchaus signifikanter Vorteil.

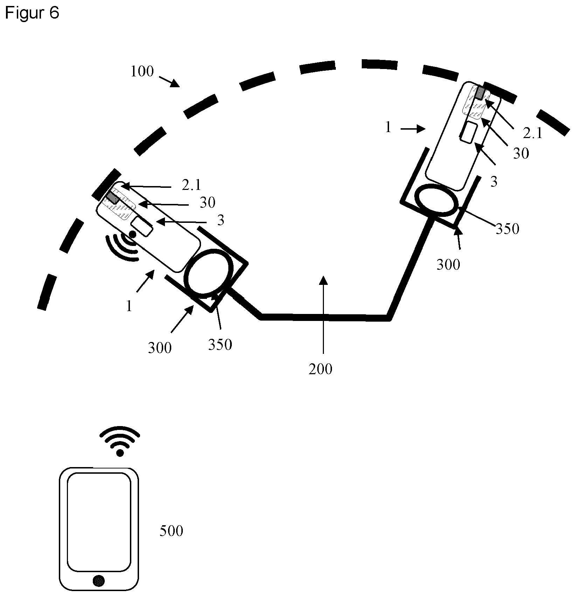

Figur 6 zeigt exemplarisch die Einbausituation einer Dichteinrichtung gemäß eines Aspekts der Erfindung in einer Saugwalze.

Die Dichteinrichtung umfasst hier zwei Dichtleisten 1, die jeweils in einem Leistenhalter 300 gelagert sind. Mittels eines Anpressschlauchs 350 werden die Leisten 1 gegen den Mantel 100 der Saugwalze gepresst. Die Dichtleisten 1 dichten dabei eine Unterdruckzone 200 ab. Durch das Anpressen der Dichtleisten 1 an den rotierenden Walzenmantel 100 verschleißt das Material, insbesondere das Basismaterial 20 der Leiste. Bei Erreichen eines festgelegten Verschleißniveaus wird der in einem ersten Abstand von der Oberseite 10 der unverschlissenen Leiste 1 angeordnete erste Temperatursensor 2.1 zerstört. Durch das ausbleibende auswertbare Temperatursignal kann die Auswerteeinheit feststellen, dass der Temperatursensor 2.1 zerstört, und damit das erste Verschleißniveau erreicht ist. Über einer Übertragungsvorrichtung können Daten von der Steuereinheit 3 zu einer Auswerteeinheit 500 übermittelt werden. Bei der in Figur 6 dargestellten Dichteinrichtung erfolgt die Übertragung kabellos. Es ist jedoch auch eine kabelgebundene Datenübermittlung vorstellbar. Da die Leistenhalter 3 im Betrieb der Saugwalze nicht rotieren, kann vergleichsweise einfach ein Kabel aus der Leiste 1 herausgeführt werden.

Der Walzenmantel 100 ist bei einer Saugwalze mit einer Vielzahl von Bohrungen versehen. Durch diese Bohrungen kann Feuchtigkeit aus der Faserstoffbahn oder einer Bespannung ins Innere der Saugwalze, und damit auch an die Dichtleiste 1 gelangen. Außerdem sind in solchen Saugwalzen üblicherweise Befeuchtungseinrichtungen vorgesehen, um ein Schmiermittel - in der Regel Wasserzwischen den Walzenmantel 100 und die Oberseite 10 der Dichtleiste 1 einzubringen. Somit steht die Oberseite 10 der Dichtleiste 1 im Betrieb der Dichteinrichtung stets im Kontakt mit Feuchtigkeit. Beim Verschleißen eines Temperatursensors 2.1 entsteht dann eine Schwachstelle, durch die die Feuchtigkeit ins Innere der Leiste 1 bis zur Steuerungseinheit 3 oder noch intakten Sensoren vordringen kann. Das Schutzmaterial 30, in das der Temperatursensor 2.1 verhindert oder behindert dieses Eindringen von Feuchtigkeit und erhöht dadurch auf einfache und kostengünstige Weise signifikant die Lebensdauer der Sensoreinheit 2.

Die gezeigten Beispiele sollten noch einmal die Möglichkeiten veranschaulichen, die sich im Rahmen der Erfindung ergeben. Die Erfindung ist jedoch nicht auf diese Ausführungen beschränkt. Insbesondere können statt der Temperatursensoren auch andere geeignete Typen von T-Sensoren zum Einsatz kommen.

### Bezugszeichenliste

- 1: Dichtleiste
- 2: Sensoreinheit
- 2.1: Erster Temperatursensor
- 2.2: Zweiter Temperatursensor
- 2.3: Dritter Temperatursensor
- 2.4: Vierter Temperatursensor
- 3: Steuereinheit
- 4: Energieversorgung
- 5: Platine
- 5.1: Platine
- 6: Einschnitt
- 7: Leitung
- 10: Oberseite
- 11: Unterseite
- 20: Basismaterial
- 30: Schutzmaterial
- 100: Walzenmantel
- 200: Unterdruckzone
- 300: Leistenhalter
- 350: Anpressschlauch
- 500: Auswerteeinheit

## Patentansprüche

1. Dichtleiste (1) für eine Dichteinrichtung zur Abdichtung einer Unterdruckzone (200) einer Saugwalze für eine Maschine zur Herstellung oder Verarbeitung einer Faserstoffbahn, insbesondere einer Papier-, Karton- oder Tissuemaschine, mit einer Oberseite (10), welche die Dichtfläche der Dichtleiste (1) bildet, wobei die Dichtleiste (1) eine Sensoreinheit (2) umfasst, welche einen ersten T-Sensor (2.1) mit einem ersten Abstand zur Dichtfläche und einen zweiten T-Sensor (2.2) mit einem zweiten Abstand zur Dichtfläche aufweist, und wobei der erste Abstand geringer ist, als der zweite Abstand, **dadurch gekennzeichnet, dass** die Dichtleiste (1) ein Basismaterial (20) umfasst sowie ein Schutzmaterial (30) das unterschiedlich zum Basismaterial (20) ist und dass die Sensoreinheit (2) zumindest teilweise, insbesondere vollständig in das Schutzmaterial (30) eingebettet, insbesondere eingegossen ist.

2. Dichtleiste (1) gemäß Anspruch 1 **dadurch gekennzeichnet, dass** es sich bei dem ersten T-Sensor (2.1) und/oder dem zweiten T-Sensor (2.2) um Sensoren handelt, die zur Messung mit einer elektrischen Spannungsquelle in Verbindung stehen.

3. Dichtleiste (1) gemäß einem der Ansprüche 1 oder 2, **dadurch gekennzeichnet, dass** es sich bei dem ersten T-Sensor (2.1) und/oder dem zweiten T-Sensor (2.2) um einen Temperatursensor (2.1, 2.2) handelt.

4. Dichtleiste (1) nach einem der vorherigen Ansprüche, **dadurch gekennzeichnet, dass** der erste T-Sensor (2.1) und der zweite T-Sensor (2.2) in Breitenrichtung der Dichtleiste (1) betrachtet durch Schutzmaterial (30) voneinander getrennt sind.

5. Dichtleiste (1) nach einem der vorherigen Ansprüche, **dadurch gekennzeichnet, dass** das Basismaterial (20) ein Graphit umfasst oder daraus besteht.

6. Dichtleiste (1) nach einem der vorherigen Ansprüche, **dadurch gekennzeichnet, dass** das Schutzmaterial (30) ein Polymermaterial umfasst oder daraus besteht.

7. Dichtleiste (1) nach einem der vorherigen Ansprüche, **dadurch gekennzeichnet, dass** die Sensoreinheit (2) eine Steuereinheit (3) aufweist, die mit dem ersten T-Sensor (2.1) und/oder dem zweiten T-Sensor (2.2) verbunden bzw. verbindbar ist.

8. Dichtleiste (1) nach einem der vorherigen Ansprüche, **dadurch gekennzeichnet, dass** die Sensoreinheit (2) weitere T-Sensoren, insbesondere noch einen dritten T-Sensor (2.3) und einen vierten T-Sensor (2.4) umfasst, welche insbesondere mit einer Steuereinheit (3) verbunden oder verbindbar sind.

9. Dichtleiste (1) nach einem der vorherigen Ansprüche, **dadurch gekennzeichnet, dass** die Sensoreinheit (2) eine Energieversorgung (4) zur Versorgung der T-Sensoren (2.1, 2.2, 2.3, 2.4) und/oder der Steuereinheit (3) umfasst.

10. Dichtleiste (1) nach einem der vorherigen Ansprüche **dadurch gekennzeichnet, dass** die Sensoreinheit (2) eine Übertragungsvorrichtung umfasst, die dazu eingerichtet ist, eine Datenverbindung, insbesondere eine drahtlose Datenverbindung zu einer Auswerteeinheit (500) außerhalb der Dichtleiste (1) aufzubauen.

11. Dichtleiste (1) nach einem der vorherigen Ansprüche, **dadurch gekennzeichnet, dass** der erste T-Sensor (2.1) auf einer ersten Platine (5, 5.1) und der zweite T-Sensor (1) auf einer zweiten Platine angebracht ist, wobei sowohl die erste Platine (5, 5.1) als auch die zweite Platine in das Schutzmaterial (30) eingebettet, insbesondere eingegossen sind.

12. Dichtleiste (1) nach einem der vorherigen Ansprüche, **dadurch gekennzeichnet, dass** die Dichtleiste (1) zwei oder mehr Sensoreinheiten (2) umfasst.

13. Dichteinrichtung zur Abdichtung einer Unterdruckzone (200) einer Saugwalze für eine Maschine zur Herstellung oder Verarbeitung einer Faserstoffbahn, insbesondere einer Papier-, Karton- oder Tissuebahn, **dadurch gekennzeichnet, dass** die Dichteinrichtung zumindest eine Dichtleiste (1) nach einem der vorherigen Ansprüche umfasst.

14. Dichteinrichtung gemäß Anspruch 13, **dadurch gekennzeichnet, dass** die Dichteinrichtung eine Auswerteinheit (500) umfasst, die mit zumindest einer Steuereinheit (3) über eine Datenverbindung, insbesondere eine drahtlose Datenverbindung gekoppelt oder koppelbar ist.

15. Dichteinrichtung gemäß Anspruch 14, **dadurch gekennzeichnet, dass** die Auswerteeinheit (500) dazu eingerichtet ist, die Temperatur und Verschleißdaten der Dichtleiste (1) zu visualisieren.
